# EUROPEAN PATENT SPECIFICATION

(11) **EP 2 488 014 B1**
(45) Date of publication and mention of the grant of the patent: **17.06.2020**
(21) Application number: 10823667.0
(22) Date of filing: 14.10.2010
(51) Int. Cl.: A01K 39/012

(54) **A POULTRY FEEDER**
GEFLÜGELFÜTTERER
DISPOSITIF D'ALIMENTATION POUR LA VOLAILLE

(30) Priority: 14.10.2009 NZ 58043309
(43) Date of publication of application: 22.08.2012
(73) Proprietor: PTN Limited, New Plymouth (NZ)
(72) Inventor: COTTAM, Stephen John, New Plymouth (NZ); ERMERINS, Franciscus Maria Wilhelmus, Lepperton 4373 (NZ)
(74) Representative: Boden, Keith McMurray
(86) International application number: PCT/NZ2010/000206
(87) International publication number: WO 2011/046456

(56) References cited:
- WO-A1-02/39811
- AU-B2- 702 485
- JP-U- S53 154 877
- US-A- 1 005 071
- US-A- 2 005 188
- US-A- 3 211 131
- US-A- 3 211 131
- US-A- 5 113 797
- US-A1- 2009 000 555
- US-B2- 7 552 697

## Description

### Field

This invention relates to feeders for supplying pellets or other food to poultry. More particularly the invention relates to poultry feeders suitable for supplying food to poultry from day olds to maturity.

### Background

Articles such as poultry feeders are known and are generally located within feeding areas where poultry are reared for either meat production or reproductive purposes. The feeders of the prior art are typically circular in shape to enable a number of poultry to congregate around the feeder. Elliptical feeders are also available.

It is important to control the rate of feed supply and consumption, and thus the rate of growth of the poultry, to ensure a consistent product (i.e. egg or chicken) size. For example, a chicken must weigh at least 1600 grams to be sold as a size 16 chicken. If a poultry farmer receives an order for 1000 size 16 chickens and cannot provide 1000 chickens weighing 1600-1699g, it may be necessary to supply a number of size 17 (i.e. 1700-1799g) or larger chickens to fulfil the order. Doing so is not an efficient use of resources, since the larger chicken will be sold at the (generally lower) price of a smaller size 16 chicken. The farmer thus foregoes a potentially higher selling price, and the larger chicken is also likely to have consumed a larger quantity of feed and thus cost more to produce.

Furthermore, consumers expect poultry that are sold as, a size 16 chicken for example, to be of reasonably consistent weight. The consumer does not expect to obtain a larger chicken one week, and a smaller chicken the next.

The weight of birds in each run usually resembles a normal distribution or bell-shaped curve. That is, the majority of birds will have a weight substantially equal to the median or mean weight, with some birds heavier and some birds lighter. To maximise profitability, the occurrence of outliers, and thus the tails of the distribution should be minimised to achieve a consistent product weight.

Consistent bird weight also allows accurate prediction of meat yield across the flock, and optimum feed conversion ratios. Ideally, the difference between the heaviest bird and the lightest bird is at a minimum.

The feeders of the prior art for various reasons may result in excessive variance in product weight.

Feeders are typically supplied with feed, which may be pellet, grain or meal, by an auger feed delivery system, which commonly supplies feed to multiple feeders on a single line at a limited rate suited to the growth rate of the poultry.

Typically, the feeding rate is controlled with a "control pan" that, once full, stops the feed supply from supplying any of the feeders on the line. The control pan is typically the final pan in any row or line supplied with feed by the feed delivery system. It is therefore possible that the amount or quality of feed in each feeder on the line may vary significantly.

Feed supply and feeding rate may also be controlled in the feeders themselves by setting the feeder to an appropriate setting which decreases the volume of feed supplied to a feeding pan of the feeder accessible by the poultry.

Feeders typically flood the feeding pan by passing the feed down a supply tube supplied by the feed delivery system. The feed falls either through the supply tube and out the open bottom end of the supply tube, or out apertures on the side of the supply tube.

The central supply tube of the prior art is typically moveable such that when the feeder is raised the apertures close and the feed falls out the open bottom end of the supply tube, beneath a feed cone. The pan then floods only to the level of the bottom of the feed cone, allowing regulation of the amount of feed supplied. The feeders of the prior art supply food in such a way that it may be difficult for all of the poultry to reach the feed.

When the apertures are open, feed spills out of the supply tube and over the feed cone into the feeding pan, flooding it to a higher level so that smaller poultry can easily feed from the feeder. The apertures of the prior art are thus typically large enough to allow a large volume of feed through. As the feeder is raised off the ground (by raising the feed delivery system) or filled with feed, the closable apertures can trap, injure, or kill the birds. This can require the complete disassembly, emptying and cleaning of the feeder.

The number of feeders required infringes on the amount of free floor space required for a set number of poultry, meaning that in order to accommodate the required number of feeders the poultry floor area must be larger than perhaps is otherwise required. Normally, four feeders are provided on each three metre length of the feed delivery system.

Where feeders are to be retrofitted to an existing feed delivery system, the spacing of adjacent feeders is determined by the spacing of outlets in the system. The maximum size of the feeders is thus dictated by the requirement for an adequate spacing between adjacent feeders allowing fully-grown poultry to feed from the entire periphery of adjacent feeders simultaneously. That is, there must be enough space to enable the poultry to feed back-to-back from adjacent feeders.

Existing poultry feeders also have problems with poultry entering the feeder and defecating in the feed, leading to feed wastage and/or unhygienic conditions.

Known feeders are described in JP S53 154877 U, US 5 113 797 A, US 1 005 071 A, WO 02/39811 A1, US 3 211 131 A and US 7 552 697 B2.

### Object of the Invention

It is therefore an object of the invention to provide a poultry feeder which overcomes or at least ameliorates one or more disadvantages of the prior art, or alternatively, to at least provide the public with a useful choice.

Further objects of the invention will become apparent from the following description.

### Summary of the Invention

The invention is defined in claim 1 and comprises a feeder comprising a polygonal feeding pan defined by a base and a plurality of side walls depending from the base, the side walls defining an outer peripheral edge of the feeder having a plurality of substantially straight outer edges. In the preferred embodiment, the feeder is configured for use in feeding poultry in particular.

According to the invention, the base is inclined towards the centre of the feeder to direct feed towards the side walls.

According to the invention, the base is substantially pyramidal, with the apex of the pyramidal base provided at or adjacent the centre of the feeder.

According to the invention, the feeder further comprises a supply tube disposed substantially centrally with respect to the feeding pan, the supply tube being adapted to engage and receive feed from a feed delivery system at a first end and supply feed to the feeding pan from a second end.

Preferably the supply tube has a polygonal shape corresponding substantially with that of the feeding pan.

According to the invention, the supply tube is provided at its second end with a feed cone and a plurality of holes adjacent the feed cone.

Preferably the shape of the feed cone is also substantially pyramidal and corresponds substantially with the shape of the base.

According to the invention, the feed cone comprises a plurality of radial strakes provided equidistantly around the feed cone.

According to the invention, the feeding pan is slidably engaged with the supply tube by way of a support means.

Preferably the supply tube is surrounded by a movable slider having a plurality of slots, and the support means adjustably engages the moveable slider.

Preferably the support means comprises a plurality of arms that extend radially from the supply tube to respective vertices of the feeding pan.

Preferably the first end of the supply tube comprises a clip adapted to hold an electrified wire.

Preferably the side walls are substantially planar.

According to a second aspect, the present invention may broadly be said to consist in a polygonal feeding pan for a feeder, the feeding pan comprising a base and a plurality of side walls depending upwardly from the base, the side walls defining an outer peripheral edge of the feeder having a plurality of substantially straight outer edges.

Preferably the base is inclined towards the centre of the feeder to direct feed towards

Preferably the base is substantially pyramidal, the pyramidal base comprising a plurality of sides corresponding substantially with the plurality of side walls of the feeding pan, the apex of the pyramidal base being provided at or adjacent the centre of the feeder.

Further aspects of the invention, which should be considered in all its novel aspects, will become apparent from the following description.

### Drawing Description

A preferred embodiment of the invention will now be described, by way of example only, with reference to the drawings in which:
**Figure 1** is a perspective view of a preferred embodiment of a poultry feeder according to the present invention;
**Figure 2** is a side view of the poultry feeder of Figure 1;
**Figure 3** is a front view of the poultry feeder of Figures 1 and 2;
**Figure 4** is a perspective view of the feed distributing portion of the poultry feeder of Figures 1-3;
**Figure 5** is a perspective view of the support means of the embodiment of Figures 1-3;
**Figure 6** is a front view of the feeding pan of the poultry feeder of Figures 1-3;
**Figure 7** is a perspective view of the feeding pan of Figure 6; and
**Figure 8** is a plan view of the feeding pan of Figure 7.

### Detailed Description of the Drawings

The present invention has been adapted primarily for use as a poultry feeder and will be described hereinafter with reference to this application. However, it will be appreciated that the invention is not limited to this particular field of use.

The invention will be described below by way of example with reference to the best method of performing the invention known to the applicant.

The applicant has identified that a significant problem with poultry feeders of the prior art arises from competition between the poultry for food. This results in a small number of dominant birds consuming a relatively greater share of feed (and more than is optimum to maximise overall feed conversion ratio) and gaining more weight than average. As a result, there are also typically a number of birds which do not receive an adequate share of feed and thus do not reach their target weight.

The applicant has discovered several reasons for this competition which are addressed or at least ameliorated by the present invention. Firstly, the circular (or elliptical) shape of the prior art feeders limits the number of poultry which can feed simultaneously from a feeder. Secondly, the prior art poultry feeders typically do not distribute feed evenly about the circumference of the feeder, such that not all poultry at the feeder have equal access to the feed. Thirdly, the prior art feeders result in excessive "fines" which are invariably left for the smaller birds, again resulting in greater variance in weight.

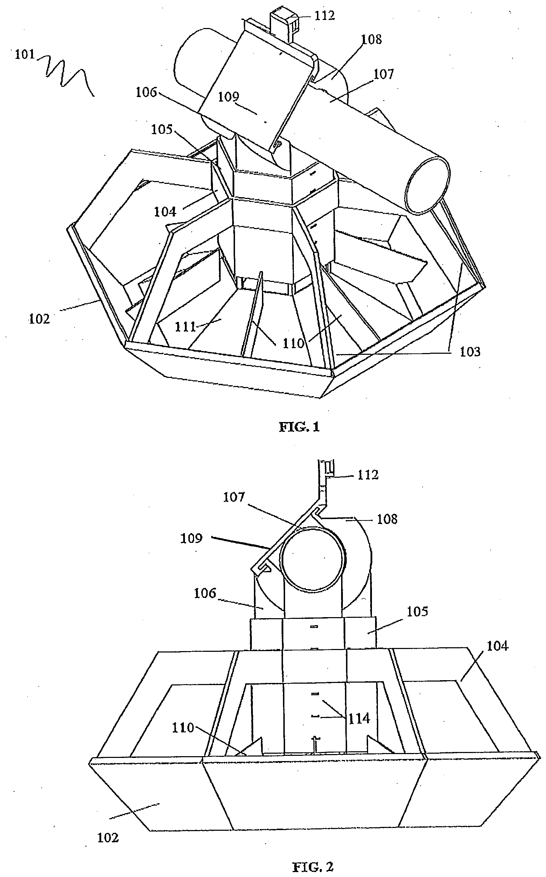

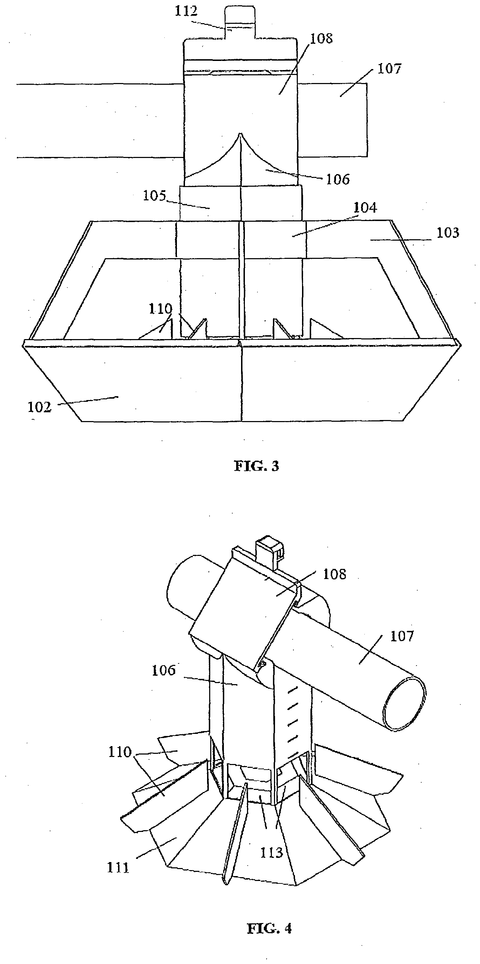

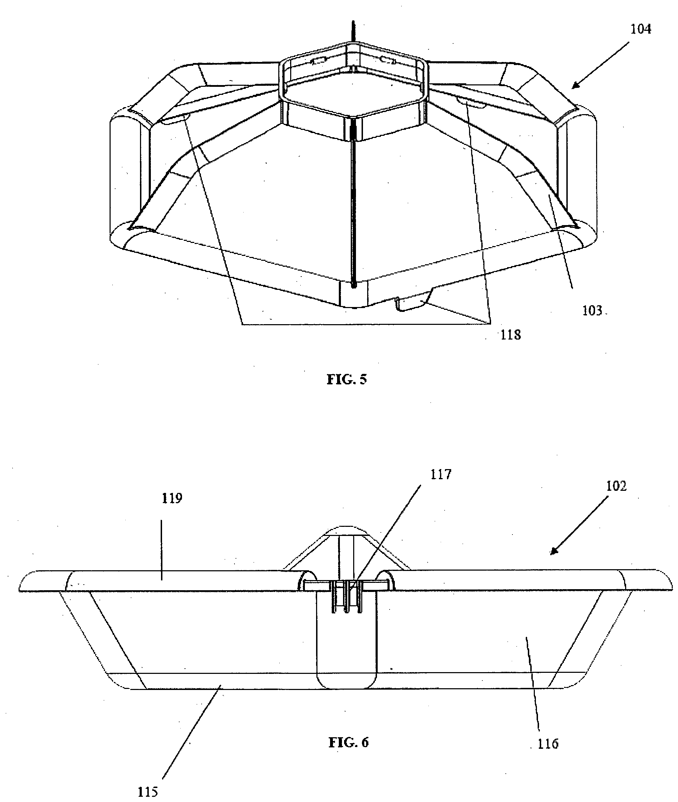

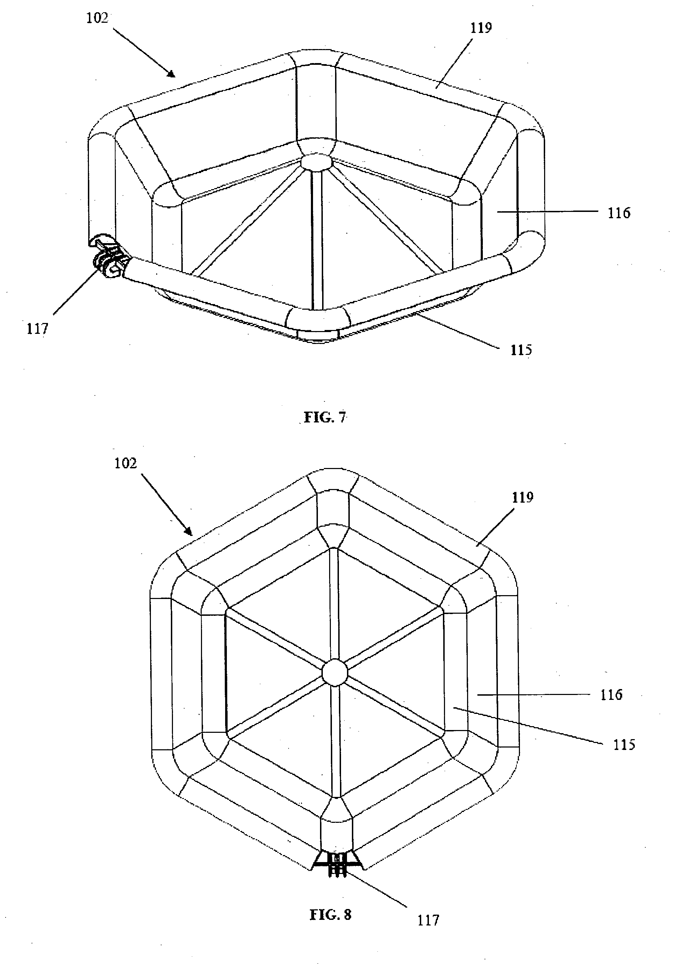

Referring first to Figures 1-3, a poultry feeder according to the present invention is shown generally referenced 101. In the preferred embodiment as illustrated, the feeder comprises three main components: a feed distributing portion (shown in detail in Figure 4); a support means (shown in detail in Figure 5); and a feeding tray or pan (shown in more detail in Figures 6-8).

In use, the feed distributing portion is coupled at a first end to a feed delivery system which supplies feed to the feeder. The feeding pan is suspended from the feed distributing portion substantially adjacent a second end thereof by way of the support means. The feeding pan receives feed from the feed delivery system via the feed distributing portion.

The poultry feeder has a generally polygonal shape with a plurality of substantially straight-edged sides or side walls at the outer periphery. In the preferred embodiment, as illustrated, the pan is substantially hexagonal, although it is to be appreciated that the pan may alternatively be substantially pentagonal, hexagonal, or octagonal, for example, without departing from the scope of the invention.

In use, the feeding pan and feed distributing portion, individually and/or collectively, act to distribute food towards the side walls of the feeder, to prevent feed accumulating at the centre of the feed pan adjacent the feed distributing portion.

The feeder is preferably constructed from a plastic material, but may alternatively be made from any other suitable material or combination of materials.

### Feed distributing portion

Referring in particular to Figure 4, the feed distributing portion includes a supply tube 106 provided at a first end (typically the top of the supply tube 106, in use) with a collar 108 which is adapted to engage with a feed tube 107 of the feed delivery system adjacent an outlet therein. The feed tube 107 normally contains an auger for conveying poultry food such as pellets or grain along the feed tube 107, falling through the outlet and into the supply tube 106.

A collar clip 109 engages collar 108 to trap the feed tube 107 within it.

At a second end (typically the bottom of the supply tube 106, in use) the supply tube 106 is provided with a feed cone 111, forming a flared end to the feed distributing portion. The feed cone preferably has a polygonal pyramid shape with a horizontal cross-section and outer edges corresponding substantially with the shape of the feeding pan, in particular the pyramidal base 115 thereof.

The outer surface of the feed cone 111 slopes downwardly such that when the feed cone is positioned adjacent the base of the feeding pan, the outer edges of the feed cone 111 are substantially adjacent the side walls of the feeding pan, with only a small spacing therebetween.

The supply tube 106 is substantially hollow, and preferably has a cross section corresponding with the polygonal shape of the feeder. That is, the supply tube is generally cylindrical, but comprises a plurality of elongate planar faces equal in number to that of the straight edges of the feeding pan and arranged to correspond therewith such that corresponding vertices of the supply tube 106, feed cone 111 and feeding pan 102 are radially aligned.

The hollow inner space of the supply tube 106 is preferably relatively significant in volume compared to the size of the feed, such that the supply tube 106 forms a hopper for storing a supply of feed.

The supply tube 106 is preferably open-ended at the second end (below the feed cone 111), and is also provided with a plurality of holes 113 in the side faces of the supply tube substantially adjacent the feed cone 111. The supply tube 106 thus supplies feed to the feeding pan at its lower end, the feed exiting the supply tube 106 either largely via the open lower end of the supply tube, or by passing through holes 113 above the cone.

A plurality of strakes 110 depend upwardly from the feed cone. According to the preferred embodiment, the strakes 110 extend radially and are provided equidistantly about the circumference of the feed cone 111. That is, the strakes extend inwardly from the centre of each straight side at or adjacent the outer periphery of the feed cone, i.e. equidistantly between adjacent vertices. Preferably one such strake 110 is provided adjacent each face of the supply tube 106, obstructing the holes 113 and thereby preventing entry of chicks and/or their body parts into the supply tube 106 where they might be injured.

The strakes 110 are preferably of a sufficient height to prevent poultry from entering the feeder once they are more than a few days in age, and also help prevent young chicks from walking around the feeder, discouraging the chicks from jumping into the feeder and defecating in the feed.

In use, the feed cone 111 is selectively displaceable from the base by way of slider 105, which will be described in further detail below.

The clip 109 retaining the feed tube may be surmounted by a wire retainer 112 which acts to retain an electrified wire above the feed tube 107. Birds attempting to roost on the feed tube will trap the wire and the metal feed tube, providing an intermittent shock sufficient to keep them from roosting on the feed tube.

### Support means

The feeding pan 102 is held in position relative to the feed distributing portion by the "spider" or support means 104. The support means comprises a substantially annular inner collar which is adapted to engage the feed distributing portion, and from which depend a plurality of legs 103 adapted to engage the feeding pan at or adjacent their opposing ends, via a substantially annular outer collar for example. The legs 103 extend radially outward and downwardly from the inner annular collar to the outer annular collar which is adapted to engage the lip 119 or outer peripheral edge of the feeding pan 102.

Preferably, the support means is provided with a number of legs equal to the number of sides or vertices of the polygonal feeder, and the legs 103 extend substantially between corresponding vertices of the polygonal feeding pan 102 and the supply tube 106.

A feed apportioning slider 105 slides within the annular inner collar of the support means/structure 104 but in use is adjustably fixed to it, preferably by slots 114 projecting into a wall of slider 105 and engaging with corresponding nubs in support means 104. Alternatively, any other engagement means may be utilised to fix the slider 105 in relation to the support means/structure 104, such as a locking screw which projects through support means/structure 104 to engage against slider 105, without departing from the invention. The slider 105 therefore provides a means for adjusting the spacing between the feed distributing portion (in particular the feed cone 111) and the feeding pan 102.

### Feeding pan

Referring in particular to Figures 6-8, the polygonal (preferably substantially hexagonal) feeding pan 102 has a base 115 and a plurality of side walls 116 to hold feed for consumption by the poultry. The side walls 116 extend upwardly and outwardly from the base 115, and define an outer peripheral edge or lip of the feeding pan comprising a plurality of substantially straight edges.

The base is predominantly inclined towards the centre (i.e. sloping downwardly from the centre to the edges of the feeding pan) to direct feed received from the substantially centrally-disposed supply tube 106 outwardly towards the side walls via gravitational force. The incline of the base must be sufficient to cause the feed to fall towards the side walls via gravitational force, but can not be too steep. If the incline is too steep, the volume of the pan is decreased. If the incline is too shallow, the volume of the pan is increased but the feed will pile up around the apertures and not flow to the outer edges. Preferably, the angle is 60° from vertical (i.e. inclined 30° with respect to the horizontal) sloping away from the centre of the pan, although it will be appreciated that alternative angles may be used to achieve the required function without departing from the scope of the present invention. Similarly, the side walls are typically angled outwardly such that the poultry is able to reach feed adjacent the intersection of the side wall and the base.

According to the invention, the base 115 is in the form of a polygonal pyramid with its apex at or substantially adjacent the centre of the feeding pan 102. The pyramid sides preferably comprise a plurality of substantially planar inclined surfaces extending from the centre of the base to substantially adjacent the side walls 116, whereby the inclined edges of the pyramidal base are radially aligned with the vertices of the polygonal pan defined by the side walls. The horizontal cross-sectional shape of the pyramidal base preferably corresponds with the shape of the feeding pan, as is the case in the hexagonal base and hexagonal pyramidal base 115 of the preferred embodiment of the invention illustrated in the drawings.

The intersection of the inclined sides of the pyramidal base 115 and the side walls 116 may be filleted or radiused, thereby transitioning smoothly from a downwards incline to an upwards incline. This forms a trough circumferentially about the base adjacent the side walls, within which feed accumulates to ensure that feed is always provided towards the outside of the feeding pan 102.

Although the pan is preferably an equilateral polygon, this is not an essential feature of the invention.

The feeding pan 102 in use may either rest on its base or be suspended above the ground by the support means 104, as described above.

The pan 102 is pivotably attached to the support means 104 by way of a hinge portion 117 adapted to engage a corresponding hinge portion provided on the support means (not shown). The pan/support means are held in a closed position by a plurality of releasable clips 118. The feeding pan 102 can thus be easily opened by releasing the clips 118, and pivoting the pan open for emptying and/or cleaning.

### Operation and use of the feeder

In normal use, the feeder of the invention is initially set to sit on the floor when the poultry concerned are chicks. The feed cone 111 thus rests atop the correspondingly-shaped base 115. The food floods the pan through holes 113 above the feed cone, to a height substantially level with the top of the holes 113. This allows the chicks to have easy access to the food, which they typically do by climbing into the pan. However, the poultry feeder is preferably designed such that the feed floods to a level that the legs 103 and strakes 110 prevent the chick walking around the feeding pan 102, and thus, discouraging the chick from an early age from entering the feed. Any reduction in the time when a chick can enter the feed/feeder leads to less wastage and a lower feed conversion ratio.

As the poultry grow, the feed tube 107 (and thus the supply tube 106 and feed cone 111) is raised with respect to the feed pan 102 such that the holes 113 are progressively closed off by the slider 105 until the feed cone engages the bottom of the slider 105, fully closing the holes so that feed only flows from the open second end of the supply tube 106, under the feed cone. At this stage of growth the chickens are grown enough that they will no longer enter the pan, but instead reach over the edge to access the food.

If the feed tube 107 is raised any higher, the feeding pan 102 will also be suspended above the ground by the support means 104. The feed pan 102 will then flood to approximately the level of the outer edges of the feed cone 111. The amount of feed supplied to the feed pan 102 can be controlled by adjusting the engagement between the inner annular collar of the support means 104 and the slider 105, which determines the spacing between the bottom edge of the feed cone 111 and the feed pan 102. Because the side walls 116 are angled outwardly, raising the feed cone 111 also increases the horizontal spacing between the outer edges of the feed cone 111 and the side walls 116, providing easier access to the feed. The slider thus also allows for regulation of feed supply and consumption.

Both the base of the feeding pan 102 and the feed cone 111 are shaped to direct feed from the supply tube 106 to the outer edges of the pan. Accordingly, whether the feed exits the supply tube 106 through the holes 113 or the open second end, the feeder fills from the outside adjacent the side walls 116.

When feed is directed to the outer edges of the pan, the poultry feed more naturally (i.e. in an up and down motion), as opposed to the feeders of the prior art in which the poultry may be forced to extend or reach forward towards the centre of the feeder to feed due to the shape of the feeder. This is because the feed floods from the inner portion of the feeders of the prior art and fills from the inside to the outside. Flooding from the inner portion of the feeder can also lead to the feeder not filling to the optimum level (due to feed piling against and blocking the apertures), resulting in an uneven feed distribution.

Having a hole 113 adjacent each planar side of the pyramidal feed cone 111 ensures that feed is distributed more evenly about the circumference of the feed pan 102. Often, the feeders of the prior art include only two opposing holes above the feed cone. Using such feeders, there is typically more feed provided to some areas of the feed pan (i.e. adjacent the holes) than others (i.e. between the holes), and the feed is thus not evenly distributed about the circumference of the feeder. Differing feed density around a feeder adversely affects poultry weight, in particular resulting in a greater variation above and below the median weight. The greater number of holes 113 (preferably six for a hexagonal feeder) and the strakes provided about the circumference of the supply tube 106 in the present invention each help overcome this problem.

The feeders of the present invention also have increased volume when compared to other feeders with an equivalent minimum dimension including any feed held in the feed tube and under the feed cone. For example, when the feeders are sitting on the ground and self flood, a round feeder holds approximately 750 g, an oval or elliptical feeder holds approximately 860 g, and the feeder of the present invention holds approximately 1560 g of feed. When the feeders are raised off the ground and self flood, a round feeder holds approximately 1360 g, an oval feeder holds approximately 1100 g, and the feeder of the present invention holds approximately 2580 g of feed. This is an advantage in that the increased volume minimises the need for stopping and starting of the auger supplying feed to the feeder. Stopping and starting of the auger has been found to increase the proportion of fines in the feed, and the increased volume of the present invention thus results in less fines, reduced wear and tear, and reduced energy costs. It is also advantageous in the event of a fault in the feed delivery system, such as a mechanical problem, interrupting the supply of food to the feeder 101 from the feed tube 107. The large volume of food is capable of feeding the poultry for a longer period of time until the fault is noticed and/or corrected.

Normally, there are a fixed number of feeders provided on a given length of feed tube. This is typically four feeders per three metre length of feed tube, for example. Decreasing the diameter of the feeders adversely affects the feeder flood volume and resulting capacity or the feeder height. Further, decreasing the diameter of the feeder would lead to an increase in the number of feeders being required to avoid competition for feed. The poultry still have to congregate around the feeder and must be able to do so that the birds feed back-to-back. If the spacing between feeders is too small to allow back to back feeding, the stress on the birds increases as there is increased competition for feed. Increased competition for feed leads to inconsistent bird weights.

The shape of the feeder of the present invention also increases the length of feeding space available for the poultry.

Increasing the feed space leads to lower competition for feed and lower stress on the birds. Birds that are less stressed are generally more healthy and feed constantly to obtain a consistent weight. However, a longer feed space made up of relatively long linear or substantially straight sections, such as the major sides of an elliptical feeder, does not necessarily enable many more birds to feed simultaneously. Because their bodies can be significantly wider than their heads, forcing poultry to feed side-by-side along a substantially straight feeding edge does not make the most effective use of the feeding space of the feeder. The poultry tend to jostle for feed and this leads to increased competition for feed, especially as the poultry get larger.

Better utilisation of the feeding space is possible when the poultry naturally position themselves radially about the feeder. The polygonal shape of the feeder of the present invention thus provides a larger feeding space than a circular feeder having the same minimum dimension (i.e. the radius of the circle being equal to the apothem of the polygon), but without dramatically increasing the number of birds feeding directly side by side, as is the case with an elliptical feeder. The polygon thus preferably has at least 5 sides, and preferably 6, although other polygons are possible without departing from the scope of the invention.

The total side lengths or perimeter length of the preferred hexagon is 12% larger than that of a prior art circular feeder of approximately equal minimum dimension (i.e. a circle having a radius roughly equal to the apothem of the polygon, the length of a line normal to one of the sides of an equilateral hexagon extending to the centre of the hexagon, whereby the circle can be thought of as being inscribed by the hexagon). This infers maximum utilisation of the available floor area of a poultry house. For example, for feeders with an equivalent minimum dimension to the feeder of the present invention and as measured between the grills, a round feeder having 14 spaces between the grills each of approximately 62 mm provides a total feeding length of approximately 868 mm, and an oval feeder having 12 spaces between the grills each of approximately 68mm provides a total feed length of approximately 816 mm. The feeder of the present invention provides increased feed length. For example, the preferred hexagonal feeder of the present invention has 170 mm between each grill (leg 103) and provides a total feeding length of 1020 mm. The increased feeding length decreases competition between birds for food and results in a narrower weight range.

Compared to typical similarly-sized (in terms of radius vs. apothem) prior art circular feeders presently on the market, the present invention provides an 18-25% greater feeding space.

A larger feeding space can also support a larger number of birds per square metre, if required, than when conventional feeders of smaller feeding space are used. Increased bird density leads to larger yields per square metre. Alternatively, fewer feeders may be required for a given number of birds, leading to more free space and improved animal welfare.

The hinge and clip engagement between the feeding pan and support means of the present invention allow the feeding pan to be easily unclipped from the support means and pivoted open for emptying and cleaning by a single person. Prior art feeders typically comprise multiple clips provided about the entire periphery of the feeder, making it difficult to disengage all of the clips.

According to another aspect, the invention may be said to consist in a polygonal feeding pan substantially as described above, which may be provided as a replacement for the feeder of the present invention, or for retrofitting to any other feeder.

From the foregoing it will be seen that the present invention provides a poultry feeder which has a number of advantages over the prior art, including but not limited to an increased feeding area which leads to less feed competition and decreased variance in product weight, improved feed supply providing easier and more natural access to the feed, increased volume, easy disassembly/reassembly for cleaning, and reduced competition for feed.

Unless the context clearly requires otherwise, throughout the description, the words "comprise", "comprising", and the like, are to be construed in an inclusive sense as opposed to an exclusive or exhaustive sense, that is to say, in the sense of "including, but not limited to".

It is to be understood that even though numerous characteristics and advantages of the various embodiments of the present invention have been set forth in the foregoing description, together with details of the structure and functioning of various embodiments of the invention, this disclosure is illustrative only, and changes may be made in detail so long as the functioning of the invention is not adversely affected. For example the particular elements of the feeding pan may vary dependent on the particular application for which it is used without variation in the scope of the present invention. In other embodiments, the slider 105 may comprise a threaded engagement, the side walls may be at least partially curved, and/or the shape of the feeder may be substantially pentagonal or octagonal, for example.

The invention may also be said broadly to consist in the parts, elements and features referred to or indicated in the specification of the application, individually or collectively, in any or all combinations of two or more of said parts, elements or features. Furthermore, where reference has been made to specific components or integers of the invention having known equivalents, then such equivalents are herein incorporated as if individually set forth.

Any discussion of the prior art throughout the specification should in no way be considered as an admission that such prior art is widely known or forms part of common general knowledge in the field.

## Claims

1. A feeder, comprising:
a polygonal feeding pan (102) defined by a base (115) and a plurality of side walls (116) depending from the base (115), the side walls (116) defining an outer peripheral edge of the feeder and having a plurality of substantially-straight outer edges (119), and the base (115) being substantially pyramidal with a plurality of inclined edges radially aligned with the vertices of the outer peripheral edge and an apex of the pyramidal base provided at or adjacent the centre of the feeder to direct feed towards the side walls (116);
a supply tube (106) disposed substantially centrally with respect to the feeding pan (102), the supply tube (106) being adapted, in use, to engage and receive feed from a feed delivery system (107) at a first end and supply feed to the feeding pan (102) from a second end, the supply tube (106) being provided at the second end thereof with a feed cone (111) and a plurality of holes (113) adjacent the feed cone (111); and
support means slidably engaging the supply tube (106) to the feeding pan (102);
wherein an intersection of the base (115) and the side walls (116) transitions from a downwards incline to an upwards incline to form a trough circumferentially about the base (115) adjacent the side walls (116), and the feed cone (111) comprises a plurality of radial strakes (110) provided equidistantly around the feed cone (111) and obstructing the holes (113) of the supply tube (106).

2. The feeder of claim 1, wherein the supply tube (106) and the feed cone (111) each have a polygonal shape corresponding substantially with that of the feeding pan (102), the supply tube (106) comprising a hole (113) in each face above the feed cone (111) and the second end of the supply tube (106) being open below the feed cone (111).

3. The feeder of claim 1 or 2, wherein the shape of the feed cone (111) is substantially pyramidal and corresponds substantially with the shape of the base (115).

4. The feeder of any one of claims 1 to 3, wherein the supply tube (106) is surrounded by a movable slider (105) having a plurality of slots, and the support means adjustably engages the moveable slider (105).

5. The feeder of claim 4, wherein the holes (113) of the supply tube (106) are closed off by the movable slider (105) as the supply tube (106) is raised, in use.

6. The feeder of any one of claims 1 to 5, wherein the support means comprises a plurality of legs (103) that extend radially from the supply tube (106) towards respective vertices of the feeding pan (102).

7. The feeder of any one of claims 1 to 6, wherein the first end of the supply tube (106) comprises a clip (112) adapted to hold an electrified wire.

8. The feeder of any one of claims 1 to 7, wherein the side walls (116) are substantially planar.

9. The feeder of any one of claims 1 to 8, wherein the feeding pan (102) is substantially pentagonal, hexagonal or octagonal.

10. The feeder of any one of claims 1 to 9, wherein the feeding pan (102) is pivotally attached to the support means by a hinge portion (117).

11. The feeder of any one of claims 1 to 10, wherein the feeding pan (102), the feed delivery system (107), the supply tube (106) and the feed cone (111) are adapted to be suspended from support means (104).

## Patentansprüche

1. Fütterungseinrichtung, welche umfasst:
einen polygonalen Futtertrog (102), der durch eine Basis (115) und mehrere Seitenwände (116), die an der Basis (115) vorgesehen sind, definiert ist, worin die Seitenwände (116) einen äußeren Umfangsrand der Fütterungseinrichtung definieren und mehrere im Wesentlichen gerade äußere Kanten (119) aufweisen, worin die Basis (115) im Wesentlichen pyramidenförmig ist und mehrere geneigte Kanten, die radial ausgerichtet sind, umfasst, worin die Eckpunkte des äußeren Umfangsrands und ein Scheitelpunkt der pyramidenförmigen Basis an oder neben dem Zentrum der Fütterungseinrichtung vorgesehen ist, um das Futter auf die Seitenwände (116) zu zu führen;
eine Zufuhrleitung (106), die im Wesentlichen zentral in Bezug zu dem Futtertrog (102) vorgesehen ist, worin die Zufuhrleitung (106) angepasst ist, bei Verwendung in Eingriff zu kommen und Futter von einem Futterliefersystem (107) an einem ersten Ende zu erhalten und Futter zu dem Futtertrog (102) aus einem zweiten Ende auszugeben, worin die Zufuhrleitung (106) an dem zweiten Ende davon mit ein Futter-Konus (111) und mehreren Löchern (113) neben dem Futter-Konus (111) ausgestattet ist; und
Trägermittel, das die Zufuhrleitung (106) mit dem Futtertrog (102) gleitend in Eingriff bringt;
worin eine Schnittfläche der Basis (115) und der Seitenwände (116) von einer Neigung nach unten in eine Neigung nach oben übergeht, um um die Basis (115) herum neben den Seitenwänden (116) einen Trog auszubilden, worin der Futter-Konus (111) mehrere radiale Planken (110) umfasst, die im gleichen Abstand um den Futter-Konus (111) vorgesehen sind und die Löcher (113) der Zufuhrleitung (106) absperren.

2. Fütterungseinrichtung nach Anspruch 1, worin die Zufuhrleitung (106) und der Futter-Konus (111) jeweils eine polygonale Form aufweisen, die im Wesentlichen der des Futtertrogs (102) entspricht, worin die Zufuhrleitung (106) ein Loch (113) in jeder Fläche über dem Futter-Konus (111) umfasst und worin das zweite Ende der Zufuhrleitung (106) unter dem Futter-Konus (111) offen ist.

3. Fütterungseinrichtung nach Anspruch 1 oder 2, worin die Form des Futter-Konus (111) im Wesentlichen pyramidenförmig ist und im Wesentlichen der Form der Basis (115) entspricht.

4. Fütterungseinrichtung nach einem der Ansprüche 1 bis 3, worin die Zufuhrleitung (106) von einem beweglichen Gleiter (105) mit mehreren Schlitzen umgeben ist, und worin das Trägermittel einstellbar mit dem bewegbaren Gleiter (105) in Eingriff kommt.

5. Fütterungseinrichtung nach Anspruch 4, worin beim Anheben der Zufuhrleitung (106) bei Verwendung die Löcher (113) der Zufuhrleitung (106) durch den bewegbaren Gleiter (105) verschlossen werden.

6. Fütterungseinrichtung nach einem der Ansprüche 1 bis 5, worin das Trägermittel mehrere Beine (103) umfasst, die sich radial von der Zufuhrleitung (106) auf die jeweiligen Eckpunkte des Futtertrogs (102) zu erstrecken.

7. Fütterungseinrichtung nach einem der Ansprüche 1 bis 6, worin das erste Ende der Zufuhrleitung (106) einen Clip (112) umfasst, der angepasst ist, einen elektrischen Draht zu halten.

8. Fütterungseinrichtung nach einem der Ansprüche 1 bis 7, worin die Seitenwände (116) im Wesentlichen planar sind.

9. Fütterungseinrichtung nach einem der Ansprüche 1 bis 8, worin der Futtertrog (102) im Wesentlichen pentagonal, hexagonal oder oktogonal ist.

10. Fütterungseinrichtung nach einem der Ansprüche 1 bis 9, worin der Futtertrog (102) über einen Scharnierbereich (117) schwenkbar an das Trägermittel angebracht ist.

11. Fütterungseinrichtung nach einem der Ansprüche 1 bis 10, worin der Futtertrog (102), das Futterliefersystem (107), die Zufuhrleitung (106) und der Futter-Konus (111) angepasst sind, an dem Trägermittel (104) angehängt zu werden.

## Revendications

1. Dispositif d'alimentation, comprenant :
un bac d'alimentation polygonal (102) défini par une base (115) et une pluralité de parois latérales (116) pendant de la base (115), les parois latérales (116) définissant un bord périphérique externe du dispositif d'alimentation et ayant une pluralité de bords externes sensiblement droits (119), et la base (115) étant sensiblement pyramidale avec une pluralité de bords inclinés radialement alignés avec les sommets du bord périphérique externe et un sommet de la base pyramidale disposé au ou adjacent au centre du dispositif d'alimentation pour diriger de la nourriture vers les parois latérales (116) ;
un tube d'acheminement (106) disposé de manière sensiblement centrale par rapport au bac d'alimentation (102), le tube d'acheminement (106) étant adapté, en utilisation, pour engager et recevoir de la nourriture provenant d'un système de distribution de nourriture (107) à une première extrémité et acheminer de la nourriture jusqu'au bac d'alimentation (102) par une seconde extrémité, le tube d'acheminement (106) comportant, à la seconde extrémité de celui-ci, un cône d'alimentation (111) et une pluralité de trous (113) adjacents au cône d'alimentation (111) ; et
un moyen de support engageant de manière coulissante le tube d'acheminement (106) au bac d'alimentation (102) ;
une intersection de la base (115) et des parois latérales (116) passant d'une inclinaison vers le bas à une inclinaison vers le haut pour former une auge de manière circonférentielle autour de la base (115) et de manière adjacente aux parois latérales (116), et le cône d'alimentation (111) comprenant une pluralité de crampons radiaux (110) disposés à équidistance autour du cône d'alimentation (111) et obstruant les trous (113) du tube d'acheminement (106).

2. Dispositif d'alimentation selon la revendication 1, dans lequel le tube d'acheminement (106) et le cône d'alimentation (111) ont chacun une forme polygonale correspondant sensiblement à celle du bac d'alimentation (102), le tube d'acheminement (106) comprenant un trou (113) dans chaque face au-dessus du cône d'alimentation (111) et la seconde extrémité du tube d'acheminement (106) étant ouverte au-dessous du cône d'alimentation (111).

3. Dispositif d'alimentation selon la revendication 1 ou 2, dans lequel la forme du cône d'alimentation (111) est sensiblement pyramidale et correspond sensiblement à la forme de la base (115).

4. Dispositif d'alimentation selon l'une quelconque des revendications 1 à 3, dans lequel le tube d'acheminement (106) est entouré d'un coulisseau mobile (105) ayant une pluralité de fentes, et le moyen de support engage le coulisseau mobile (105) de manière ajustable.

5. Dispositif d'alimentation selon la revendication 4, dans lequel les trous (113) du tube d'acheminement (106) sont fermés par le coulisseau mobile (105) à mesure que le tube d'acheminement (106) est élevé, en utilisation.

6. Dispositif d'alimentation selon l'une quelconque des revendications 1 à 5, dans lequel le moyen de support comprend une pluralité de pattes (103) qui s'étendent radialement à partir du tube d'acheminement (106) vers des sommets respectifs du bac d'alimentation (102) .

7. Dispositif d'alimentation selon l'une quelconque des revendications 1 à 6, dans lequel la première extrémité du tube d'acheminement (106) comprend une attache (112) apte à maintenir un fil électrifié.

8. Dispositif d'alimentation selon l'une quelconque des revendications 1 à 7, dans lequel les parois latérales (116) sont sensiblement planes.

9. Dispositif d'alimentation selon l'une quelconque des revendications 1 à 8, dans lequel le bac d'alimentation (102) est sensiblement pentagonal, hexagonal ou octogonal.

10. Dispositif d'alimentation selon l'une quelconque des revendications 1 à 9, dans lequel le bac d'alimentation (102) est fixé de manière pivotante au moyen de support par une partie charnière (117).

11. Dispositif d'alimentation selon l'une quelconque des revendications 1 à 10, dans lequel le bac d'alimentation (102), le système de distribution de nourriture (107), le tube d'acheminement (106) et le cône d'alimentation (111) sont aptes à être suspendus à partir du moyen de support (104).
